# EUROPÄISCHE PATENTSCHRIFT

(11) **EP 1 474 666 B1**
(45) Veröffentlichungstag und Bekanntmachung des Hinweises auf die Patenterteilung: **08.08.2007**
(21) Anmeldenummer: 02701275.6
(22) Anmeldetag: 13.02.2002
(51) Int. Cl.: G01J 3/06

(54) **QUASI-STATISCHE AUSLENKUNGSVORRICHTUNG FÜR SPEKTROMETER**
QUASI-STATIC DEFLECTION DEVICE FOR SPECTROMETERS
DISPOSITIF DE DEVIATION QUASI STATIQUE POUR SPECTROMETRES

(43) Veröffentlichungstag der Anmeldung: 10.11.2004
(73) Patentinhaber: Fraunhofer-Gesellschaft zur Förderung der angewandten Forschung e.V., 80686 München (DE)
(72) Erfinder: SCHENK, Harald, 01139 Dresden (DE); GRUEGER, Heinrich, 01109 Dresden (DE)
(74) Vertreter: Schoppe, Fritz
(86) Internationale Anmeldenummer: PCT/EP2002/001510
(87) Internationale Veröffentlichungsnummer: WO 2003/069290

(56) Entgegenhaltungen:
- GB-A- 2 066 985
- US-A- 4 469 441

## Beschreibung

Die vorliegende Erfindung bezieht sich allgemein auf die Spektrometrie, wie zum Beispiel die Emissions-, Absorptions- oder Transmissions-Spektroskopie, und insbesondere auf ein Spektrometer, welches als Mikrospektrometer realisierbar ist.

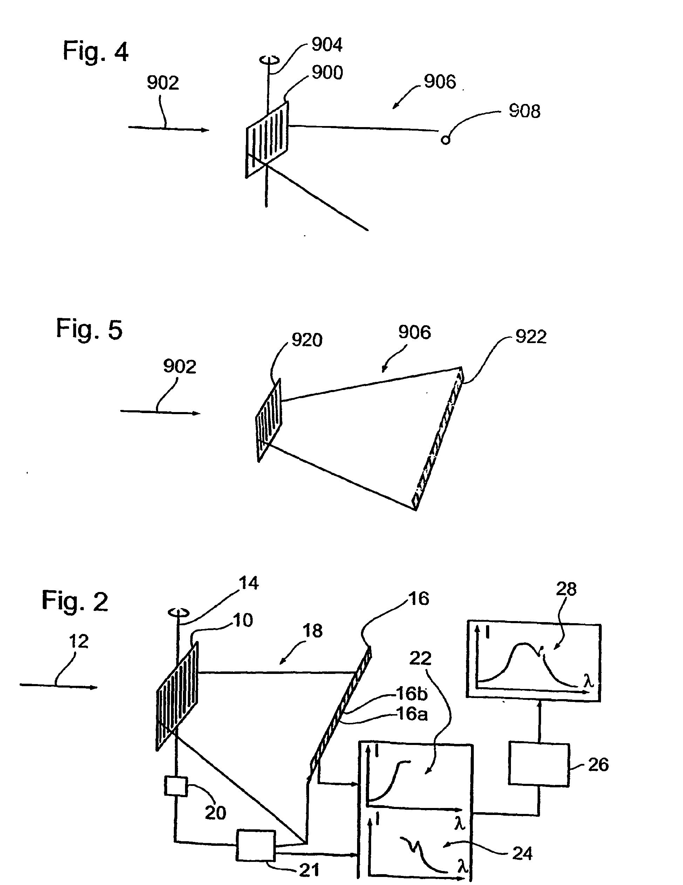

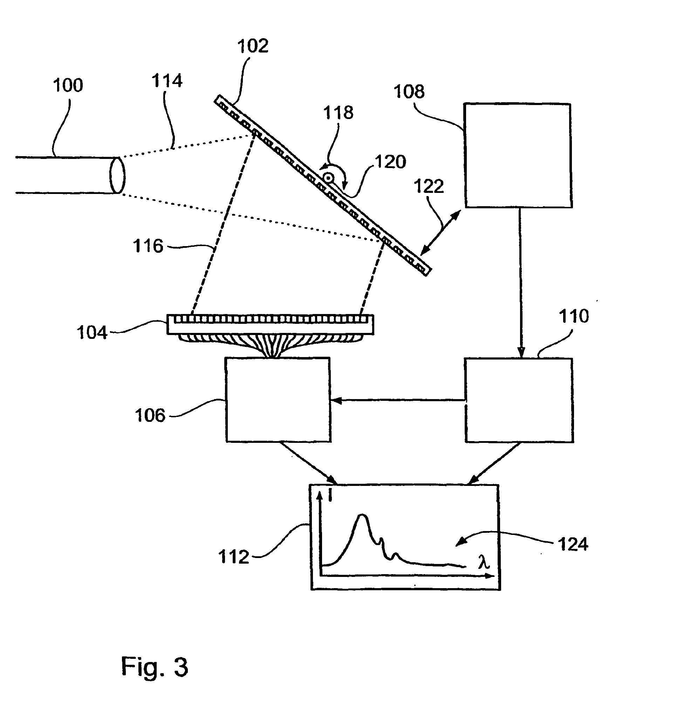

Mit dem Spektrometer ist es möglich Licht in einem bestimmten Spektralbereich wellenlängenabhängig zu vermessen. Kernstück jeden Spektrometers ist ein dispersives Element, wie z.B. ein Gitter oder Prisma, auf das das Licht, dessen spektrale Verteilung bestimmt werden soll, einfällt, und das das einfallende Licht in seine spektralen Bestandteile zerlegt, und ein entsprechender Detektor zum Aufnehmen eines oder mehrer der spektralen Bestandteile. Fig. 4 zeigt eine klassische Anordnung eines Gitterspektrometers. Ein bewegliches Gitter 900 wird durch einen Eintrittsspalt und ein bündelndes Element (nicht gezeigt) mit einem Lichtstrahl 902 beleuchtet, dessen spektrale Verteilung bestimmt werden soll. Das bewegliche Gitter 900 ist um eine Achse 904 drehbar gelagert, wobei die Einstellung des Gitters 900 quasi statisch, typischerweise über einen Schrittmotor, erfolgt. Das nach Wellenlängen aufgespaltene Licht 906 - genauer einer spektraler Bestandteil desselben - wird von einem Detektorelement 908 erfaßt, während das Gitter 900 in verschiedene Stellungen bewegt wird. Auf diese Weise wird das nach Wellenlängen aufgespaltene Licht 906 durch den Detektor 908 abgetastet, wobei dessen Meßsignale entsprechend aufgezeichnet werden, um die spektrale Verteilung des Lichtstrahles 902 zu bestimmen.

Für sogenannte "Low-Cost-" (Niedrigpreis-) Anwendungen sind Geräte des Typs von Fig. 4 aufgrund der aufwendigen mechanischen Steuerung der quasi statischen Bewegung des Gitters 900 zu aufwendig und teuer. Zudem ist der Gerätetyp von Fig. 4 empfindlich gegenüber Stößen und Temperaturschwankungen. Bei Stößen oder Erschütterungen benötigt das Gitter eine lange Zeit, um wieder in eine definierte Auslenkungsstellung zurückzukehren, und der Schrittmotor läuft Gefahr, ein Inkrement zu überspringen, ohne daß dies von der Motorsteuerung erfaßt wird. Zudem ist die mikromechanische Herstellbarkeit von Schrittmotoren im Hinblick auf die Miniaturisierung begrenzt. Ein weiterer Nachteil besteht darin, daß die Lichtdichtheit des Gehäuses (nicht gezeigt) dieser Geräte trotz aller notwendigen Gerätezuleitungen beispielsweise den mechanischen Antrieb des Gitters 900 und den Betrieb des Detektorelements 908 gewährleistet sein muß. Insbesondere ist die Meßdauer zur Bestimmung der spektralen Verteilung des einfallenden Lichtes 902 lang.

Neben den klassischen Lösungen von Fig. 4 gibt es seit einigen Jahren Miniaturspektrometer in Form von PC-Einsteckkarten oder in Form von kleineren externen Gehäusen mit einer entsprechenden Computerschnittstelle. Der prinzipielle Aufbau dieser Miniaturspektrometer ist in Fig. 5 gezeigt. Ein Gitter 920, auf welches der Lichtstrahl 902 einfällt, eine Photodiodenzeile 922 sowie eine notwendige Ansteuerlogik (nicht gezeigt) sind auf einer Platine (nicht gezeigt) angebracht. Das Gitter 920 ist bei diesen Miniaturspektrometern feststehend bzw. fest angebracht und befindet sich gemeinsam mit der Photodiodenzeile 922 in einer Verkapselung (nicht gezeigt). Ein Beispiel für ein Miniaturspektrometer der in Fig. 5 gezeigten Art ist beispielsweise in der DE 19836595A1 gezeigt.

Obwohl die Preise solcher Spektrometer mit festem Gitter niedrig sind, ist bei diesen Fest-Gitter-Systemen nachteilhaft, daß der Wellenlängenbereich, der durch die Photodiodenzeile 922 erfaßt wird, sowie die spektrale Auflösung bei der Herstellung festgelegt werden und somit unveränderbar sind. Eine Möglichkeit, Wellenlängenbereich und spektrale Auflösung an eine spezielle Anwendung basierend auf einem bestehenden Angebot an solchen Fest-Gitter-Spetrometern anzupassen, besteht lediglich darin, mehrere Spektrometer im Master-Slave-Betrieb parallel zu verwenden, wobei mehrere Spektrometer verschiedener Auflösung bzw. verschiedenen Wellenlängenbereichs gekoppelt werden. Hierdurch entstehen jedoch zusätzliche Kosten pro Slavemodul. Eine flexible Lösung, bei der der erfaßbare Wellenlängenbereich sowie die spektrale Auflösung jederzeit verändert werden können, wird zudem auch durch diese modulare Kopplung mehrerer Module nicht erzielt.

Ein spezielles Problem beim Entwurf von Mikrospektrometern besteht darin, daß der zur Verfügung stehende Platz begrenzt ist, wodurch der erfaßbare Detektionsbereich einerseits und die erzielbare Auflösung andererseits begrenzt sind. Der erfaßbare Wellenlängenbereich hängt von den fest vorgegebenen Gitterabmessungen, insbesondere der Gitterabstand, und dem Abstand des Gitters von dem Detektorelement, der sogenannten Basislänge, ab. Die Auflösung des Spektrometers hängt neben anderen Größen, wie z.B. der Größe eines Eintritts- und Austrittsspalts und der verwendeten Brechungsordnung, von der Basislänge, der Gitterstrichzahl und dem Abstand der Photodiodenelemente der Photodiodenzeile bzw. der Genauigkeit der Gitterpositionierung ab. Wird beispielsweise unter Verwendung einer Photodiodenzeile mit fester Dichte und unter Berücksichtigung von maximalen Abmessungen ein Spektrometer des Typs von Fig. 5 für eine hohe Auflösung ausgelegt, so geschieht dies unter Einbußen des erfaßbaren Spektralbereichs, und wird umgekehrt das Spektrometer für einen großen Spektralbereich entworfen, ergibt sich eine schlechtere Auflösung.

Typische Prozeßspektrometer, die in der Form von Zeilenspektrometern mit fest montiertem Gitter und CCD- oder Photodiodenzeile gebildet sind, verwenden Zeilenphotodetektoren mit typischerweise 1024 maximal 2048 Zeilen. Zur Trennung zweier Spektrallinien sind theoretisch mindestens drei Zeilenelemente notwendig, wobei jedoch praktisch etwa 5 bis 7 Zeilen zur Trennung von Spektrallinien notwendig sind. Unter der Annahme des Einsatzes eines Lichtwellenleiters als Spalt und der Basislänge eines PC-Kartenspektrometers ergibt sich bei diesen Zeilenspektrometern eine Auflösung im Bereich von 0,2 nm bei einem spektralen Detektionsbereich von 60 nm. Diese Auflösung ist zwar für viele Fälle ausreichend, der resultierende spektrale Detektionsbereich ist jedoch für viele Anwendungen zu klein, da zur Auswertung meistens zwei oder mehr Spektrallinien des zu untersuchenden Spektrums berücksichtigt werden müssen und deshalb im Detektionsbereich liegen müssen. Wird das Spektrometer alternativ für eine niedrigere Auflösung ausgelegt, kann ein größerer Bereich von beispielsweise 600 nm erreicht werden, wie es beispielsweise für die Spektroskopie über den sichtbaren Spektralbereich, d.h. für die Wellenlängen von 400 nm bis 800 nm, hinaus ausreichen würde, jedoch bietet die sich ergebende Auflösung von 2 nm nur eine sehr mäßige Qualität.

Es besteht folglich ein Bedarf in der Technik nach einem Spektrometer, das mikromechanisch hergestellt werden kann, und das trotz Miniaturisierung eine ausreichende Auflösung und gleichzeitig einen ausreichend Spektral- und Detektionsbereich sicherstellt. Im Vergleich zu den klassischen Spektrometertypen von Fig. 4 sollte die Messung zudem weniger aufwendig, flexibler und weniger lang sein. Zudem sollte ein ausreichender Schutz vor Erschütterungen und Stößen gewährleistet sein.

Die Aufgabe der vorliegenden Erfindung besteht darin, ein Spektrometer und ein Verfahren zum Bestimmen der spektralen Verteilung eines Lichtstrahls zu schaffen, das eine ausreichende Auflösung und einen ausreichenden Detektionsbereich liefert und dabei unanfälliger gegenüber Erschütterungen und Stößen ist.

Diese Aufgabe wird durch ein Spektrometer gemäß Anspruch 1 und ein Verfahren gemäß Anspruch 16 gelöst.

Der Erfindung liegt die Erkenntnis zugrunde, daß die quasistatische Auslenkung des dispersiven Elements auch bei einer Miniaturisierung erzielt werden kann, und daß ein höheres Maß an Unanfälligkeit gegenüber Erschütterungen und Stößen erzielt werden kann, wenn für das dispersive Element eine Aufhängung, die dasselbe in eine Ruhelage vorspannt, sowie zur Auslenkung eine Einrichtung zum Halten des dispersiven Elements in eine ausgelenkte Stellung verwendet wird, derart, daß sich ein Kräftegleichgewicht zwischen der Haltkraft und der Vorspannkraft einstellt. Auf diese Weise kehrt das dispersive Element nach Stößen oder Erschütterungen immer wieder in die durch die Haltekraft definierte Stellung zurück. Bei geeigneter Dämpfung kann zudem die Zeit gering gehalten werden, die zur Rückkehr des dispersiven Elements in die definierte ausgelenkte Stellung nötig ist.

Ein erfindungsgemäßes Spektrometer umfaßt ein dispersives Element zum spektralen Zerlegen eines Lichtstrahls, dessen spektrale Verteilung bestimmt werden soll, in spektrale Bestandteile, sowie eine Aufhängung zum Tragen des dispersiven Elements und zum Vorspannen desselben in eine Ruhestellung mit einer Vorspannkraft, wenn sich das dispersive Element in einer ausgelenkten Stellung befindet. Das dispersive Element ist gemäß einem Ausführungsbeispiel ein mikromechanisch hergestellter Spiegel mit einer Phasen- oder Amplitudenmodulationsgitterstruktur an der Spiegeloberfläche, der von zwei gegenüberliegenden Seiten entlang einer zentralen Achse an zwei Stegen als Torsionsfedern aufgehängt ist. Das Spektrometer umfaßt ferner eine Einrichtung zum Halten des dispersiven Elements in der ausgelenkten Stelle, wobei die Einrichtung zum Halten ausgebildet ist, um eine Haltekraft an das dispersive Element anzulegen, so daß sich an der ausgelenkten Stellung des dispersiven Elements ein Kräftegleichgewicht zwischen der Haltekraft und der Vorspannkraft einstellt. Gemäß einem Ausführungsbeispiel der vorliegenden Erfindung wirkt die Halteeinrichtung beispielsweise kapazitiv und besteht aus einer festen Elektrode und einem als Gegenelektrode dienenden Bereich des dispersiven Elements. Eine Steuereinrichtung kann die Halteeinrichtung steuern, um die ausgelenkte Stellung zu variieren, so daß für einen Detektor des Spektrometers verschiedene spektrale Bestandteile erfaßbar werden.

Um ein Spektrometer mit begrenzten zur Verfügung stehenden physikalischen Abmessungen zu erhalten, das erheblich verbesserte Eigenschaften aufweist, wird gemäß Ausführungsbeispielen der vorliegenden Erfindung die Beweglichkeit des dispersiven Elements mit der Verwendung einer aus mehreren Detektorelementen bestehenden Detektorzeile einer herkömmlichen Miniaturspektrometers von Fig. 5 verknüpft, wobei zur Bestimmung der spektralen Verteilung eines Lichtstrahls mehrere Aufnahmen miteinander kombiniert werden. Nachteile, die bei einer Miniaturisierung unvermeidlich auftreten, wie die geringeren geometrischen Abmessungen, insbesondere im Hinblick auf die Basislänge des Spektrometers und die Länge der Detektorzeile, und die hierdurch auftretenden Beschränkungen hinsichtlich Auflösung bzw. spektralem Detektionsbereich, können durch Kombination mehrerer Aufnahmen der unterschiedlichen Stellungen des dispersiven Elements überwunden werden.

Gemäß einem Ausführungsbeispiel der vorliegenden Erfindung umfaßt ein Spektrometer eine Detektorzeile aus mehreren Detektorelementen. Jedes Detektorelement erfaßt zu einem Zeitpunkt einen unterschiedlichen spektralen Bestandteil des einfallenden Lichtstrahls. Die von den Detektorelementen der Detektorzeile zu einem Zeitpunkt erfaßten spektralen Bestandteile bilden zusammen eine Aufnahme bzw. Belichtung, die sich über einen Wellenlängenbereich erstreckt, die von der Stellung des dispersiven Elements während der Belichtung bzw. der Aufnahme abhängt. Für jede Bestimmung der spektralen Verteilung des Lichtstrahls werden zwei Aufnahmen vorgenommen, die durch die Steuereinheit gesteuert werden, wobei das dispersive Element zwischen den zwei Aufnahmen von einer ersten zu einer zweiten Stellung bewegt wird. Um die Auflösung zu verbessern, erfolgt die Steuerung der Belichtungszeitpunkte der Detektorzeile derart, daß die spektralen Bestandteile der ersten Aufnahme mit denjenigen der zweiten Aufnahme verschachtelt sind, so daß die erste und die zweite Aufnahme im wesentlichen denselben spektralen Bereich umfassen. Die Kombination der ersten und der zweiten Aufnahme entspricht in diesem Fall einer Bestimmung der spektralen Verteilung, die bei einfacher Belichtung lediglich durch eine Detektorzeile mit höherer Detektorelementdichte hätte erzielt werden können.

Um einen größeren spektralen Detektionsbereich zu erzielen, steuert die Steuereinheit die Detektorzeile derart an, daß sich das dispersive Element zwischen der ersten und der zweiten Aufnahme soweit bewegt hat, daß die spektralen Bestandteile der ersten Aufnahme außerhalb des zwischen den spektralen Bestandteilen der zweiten Aufnahme liegenden Bereichen liegen, und daß sich die spektralen Bestandteile der ersten Aufnahme und der spektralen Bestandteile der zweiten Aufnahme aneinander anschließen. Die Kombination der beiden Aufnahmen entspricht folglich einer Bestimmung einer spektralen Verteilung wie sie andernfalls mittels einer einzigen Belichtung durch beispielsweise eine größere Detektorzeile hätte erzielt werden müssen.

Bevorzugte Ausführungsbeispiele der vorliegenden Erfindung werden nachfolgend bezugnehmend auf die beiliegenden Zeichnungen näher erläutert. Es zeigen:
- Fig. 1: eine schematische Seitenansicht eines an einer Torsionsfeder aufgehängten mikromechanisch hergestellten Phasen- oder Amplitudenmodulationsgitters, das kapazitiv ausgelenkt wird, gemäß einem Ausführungsbeispiel der vorliegenden Erfindung;
- Fig. 2: eine schematische Darstellung eines Spektrometeraufbaus gemäß einem Ausführungsbeispiel der vorliegenden Erfindung;
- Fig. 3: eine spezielle Realisierung eines Spektrometers, das einen Betriebsmodus gemäß der vorliegenden Erfindung aufweist;
- Fig. 4: eine schematische Darstellung eines herkömmlichen Spektrometertyps; und
- Fig. 5: eine schematische Darstellung eines weiteren herkömmlichen Spektrometertyps.

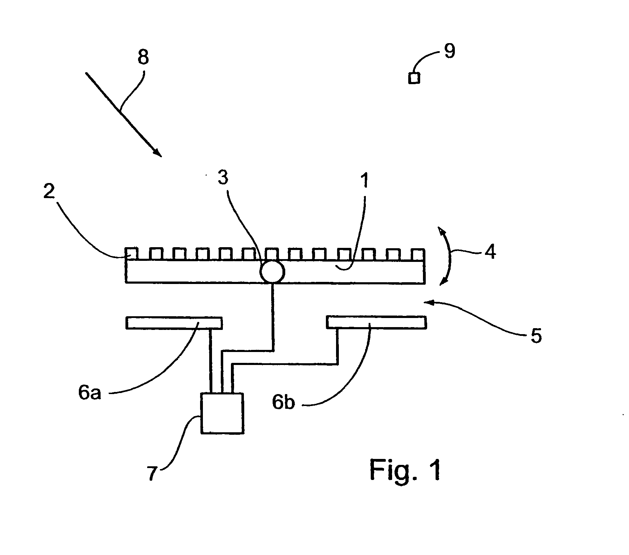

Bevor bezugnehmend auf Fig. 2-5 spezielle Ausführungsbeispiele der vorliegenden Erfindung für Spektrometer beschrieben werden, wird im folgenden bezugnehmend auf Fig. 1 ein Ausführungsbeispiel für eine Aufhängung des dispersiven Elements sowie für seine Auslenkung beschrieben, um die quasistatische Auslenkung desselben zu erzielen.

Fig. 1 zeigt ein durch elektrostatische Kräfte quasistatisch auslenkbares Gitter. Das Gitter ist mikromechanisch hergestellt und besteht aus einer rechteckigen Platte 1, das auf seiner Hauptseite 2 derselben eine Struktur 2 zur Phasen- oder Amplitudenmodulation aufweist, welche somit als Reflektionsgitter dient. Die Platte 2 wird über zwei Stege 3 an zwei gegenüberliegenden Seiten mittig entlang einer zentralen Achse getragen, so daß die Platte 1 um die durch die Torsionsfedern 3 definierte Achse schwenkbar ist, wie es durch den Doppelpfeil 4 veranschaulicht ist. Die Stege 3 dienen hierbei als Torsionsfeder, die eine von der Auslenkung 4 der Platte 1 aus der Ruhelage, wie sie in Fig. 1 dargestellt ist, abhängige, wie z.B. zu derselben proportionale, Vorspannkraft in die Ruhelage auf die Platte 1 ausübt. Über einen Spalt 5 sind der nicht strukturierten Hauptseite der Platte 1 gegenüberliegend zwei Elektroden 6a und 6b angeordnet, je eine auf einer anderen der durch die durch die Torsionsfedern 3 verlaufende Achse definierten Hälften. Die Elektroden 6a und 6b wirken kapazitiv zusammen mit der Platte 1, welche hierzu entweder aus einem leitenden Material besteht oder beispielsweise auf der den Elektroden 6a und 6b gegenüberliegenden Unterseite eine leitende Schicht aufweist.

Nachdem im vorhergehenden der Aufbau eines quasistatisch auslenkbaren Gitters gemäß einem Ausführungsbeispiel der vorliegenden Erfindung beschrieben worden ist, wird im folgenden dessen Funktionsweise beschrieben. Die Platte 1 bzw. dessen leitfähiger Bereich wird über die Torsionsfeder 3 auf einem definierten Potential gehalten, die hierzu entweder selbst aus einem leitfähigen Material besteht, oder teilweise, wie z.B. auf der gesamten Unterseite oder nur an den Stellen oberhalb der Elektroden 6a und 6b, eine leitfähige Beschichtung aufweist. Wird zwischen der Platte 1 und der Elektrode 6a eine Spannung angelegt, so verkippt bzw. schwenkt die Platte 1 (aus der Perpektive des Betrachters aus) gegen den Uhrzeigersinn zu der Elektrode 6a hin, und zwar so weit, bis sich das elektrostatische Moment und das durch die Torsion der Stege 3 entstehende mechanische Moment ausgleichen. Gleichermaßen wird durch Anlegen einer Spannung zwischen der Platte 1 und der Elektrode 6b eine Auslenkung der Platte 1 im Uhrzeigersinn zu der Elektrode 6b hin erzielt. Wird die Spannung abgeschaltet, so wird die Platte 1 durch die mechanische Rückstellkraft der Torsionsfedern 3 in Abhängigkeit von der Dämpfung durch die Stege 3 in ihre Ruheposition zurückkehren. Die Dämpfung sollte geeignet sein, um ein Überschwingen der Platte einerseits und ein zu langsames Zurückkehren in die Ruhelage andererseits zu verhindern. Bei Erschütterungen oder Stößen führt die Platte 1 stets zu der ausgelenkten Stellung zurück, die durch die Potentialdifferenz zwischen der Elektrode 6a und der Platte 1 bzw. der Elektrode 6b und der Platte 1 einerseits und die Rückstellkraft der Torsionsfedern 6a und 6b bzw. der durch dieselben definierten Federkonstante andererseits definiert wird. Ein übermäßiges Hin- und Herschwingen der Platte 1 kann durch geeignetes Einstellen der Dämpfung erzielt werden. Da Dämpfung und Federkonstante es vorteilhaft sein, beim Einstellen von Dämpfung und Federkonstante einen geeigneten Kompromiß zu treffen.

Eine Steuereinrichtung 7, die mit den Elektroden 6a und 6b sowie mit der Platte 1 leitfähig verbunden ist, steuert die Potentialdifferenz zwischen der Platte 1 und der Elektrode 6a bzw. der Platte 1 und der Elektrode 6b, je nachdem, ob die Platte 1 im Uhrzeigersinn oder gegen den Uhrzeigersinn verkippt werden soll. Die Steuerung ist in Fig. 1 zum leichteren Verständnis vereinfacht dargestellt und wird beispielsweise durch Ansteuern einer Spannungsquelle, um deren Ausgangsspannung einzustellen, und Auswählen der Elektrode, an die die Ausgangsspannung angelegt wird, durchgeführt, wobei die Platte und die jeweils nicht ausgewählte Elektrode auf Masse geschaltet werden. Durch Variieren der Potentialdifferenz und damit des elektrostatischen Moments stellt die Steuereinrichtung 7 verschiedene Auslenkungsstellungen der Platte 1 ein. Je nach eingestellter Auslenkung der Platte 1 und damit des Gitters 2 erfaßt ein Detektor 9, der in einem geeigneten Abstand von der strukturierten Oberfläche 2 der Platte 1 entfernt angeordnet ist, einen unterschiedlichen spektralen Bestandteil des auf das Gitter 2 einfallenden Lichtstrahles 8.

Es wird darauf hingewiesen, daß alternativ zu dem Ausführungsbeispiel von Fig. 1 das Gitter ferner auf andere Weise in eine Ruhestellung vorgespannt sein könnte. Die Platte 1 könnte beispielsweise einseitig eingespannt sein, um kapazitiv von einer Elektrode angezogen und somit - in eine Richtung - auslenkbar zu sein, wobei sich ein Gleichgewicht zwischen elektrostatischem Moment und Biegemoment einstellt. Ferner könnte anstatt der in Fig. 1 beschriebenen elektrostatischen Auslenkung eine induktive oder piezoelektrische Auslenkung verwendet werden.

Wie es bereits beschrieben worden ist, hängt die Wellenlänge des von dem Detektor 9 erfaßten spektralen Bestandteils von der Stellung der Platte 1 ab. Um die von dem Detektor 9 erfaßten Meßwerte mit der augenblicklich erfaßten Wellenlänge zu korrelieren, kann eine zusätzliche Einrichtung (nicht gezeigt) vorgesehen sein, die die Auslenkung der Platte 1 zum Erfassungszeitpunkt des Detektors 9 kapazitiv, piezoresistiv, induktiv oder optisch erfaßt. Diese Meßwerte könnten dann sowohl zur Zuordnung zu den spektralen Abtastwerten des Detektors 9 als auch zu Rückkopplung zu der Steuereinrichtung 7 verwendet werden. Alternativ wird die Kennlinie des Systems aus Platte und Torsionsfeder, d.h. der Zusammenhang zwischen Potentialdifferenz und Auslenkung vorab aufgenommen und von der Steuereinrichtung 7 zur Bestimmung des Auslenkwinkels bei gegebener Spannung verwendet.

Bezugnehmend auf Fig. 2 wird zunächst ein stark vereinfachtes Ausführungsbeispiel der vorliegenden Erfindung beschrieben, bei dem als Detektor eine Detektorzeile verwendet wird, und bei dem zusätzlich eine Kombination zweier Belichtungen verwendet wird.

Das Spektrometer von Fig. 2 umfaßt ein bewegliches Gitter 10, auf welches ein Lichtstrahl 12 einfällt, dessen spektrale Verteilung zu bestimmen ist. Das bewegliche Gitter 10 ist um eine Achse 14 drehbar gelagert, wie es beispielsweise in Fig. 1 gezeigt ist. Eine Detektorzeile 16 aus mehreren Detektorelementen 16a, 16b, von denen der Übersichtlichkeit halber lediglich zwei mit Bezugszeichen versehen sind, ist angeordnet, um das durch das bewegliche Gitter 10 in seine spektralen Bestandteile zerlegte Licht 18 zu empfangen. Zur Bewegung des beweglichen Gitters 10 ist eine geeignete Ansteuerung 20 vorgesehen, die zur Ansteuerung mit dem beweglichen Gitter 10 über eine induktive, kapazitive oder mechanische Kopplung gekoppelt ist. Mit der Ansteuerung auf der einen und dem Detektor auf der anderen Seite ist eine Steuereinheit 21 gekoppelt, die die Belichtungszeitpunkte, zu denen der Detektor Aufnahmen durchführt, relativ zu der Bewegung des Gitters 10, steuert. Hierzu erfaßt die Ansteuerung 20 (über einen bekannten Zusammenhang zwischen Ansteuerung und Auslenkung oder mittels einer eigens vorgesehenen Erfassungseinrichtung, wie es bezugnehmend auf Fig. 1 beschrieben wurde) die augenblickliche Stellung des Gitters 10 und gibt an die Steuereinheit 21 ein Signal aus, das die augenblickliche Stellung anzeigt. Die Steuereinheit 21 bestimmt ihrerseits die Belichtungszeitpunkte, zu denen die Detektorzeile 16 Aufnahmen vornehmen soll, und sendet hierzu Auslösesignale an die Detektorzeile 16.

Jedes Detektorelement 16a, 16b erfaßt zu einem gegebenen Zeitpunkt einen spektralen Bestandteil, der einer Wellenlänge entspricht, die von der augenblicklichen Stellung des Gitters 10 abhängt, oder genauer eine Intensität, die dem spektralen Bestandteil entspricht. Alle Detektorelemente 16a,16b erfassen zusammen zu jedem Zeitpunkt folglich einen abgetasteten Wellenlängenbereich des Spektrums des Lichtstrahls 12.

Erfindungsgemäß wird zur Bestimmung der spektralen Verteilung des Lichtstrahls 12 zunächst eine Aufnahme durch den Detektor 16 aufgenommen. Jedes Detektorelement 16a und 16b erfaßt für diese Aufnahme einen unterschiedlichen spektralen Bestandteil des in seine spektralen Bestandteile zerlegten Lichtes 18. Die Detektorzeile 16 gibt das Ergebnis der ersten Aufnahme aus, wobei das Ergebnis schematisch bei 22 als ein Graph gezeigt ist, bei dem die x-Achse der Wellenlänge λ und die y-Achse der Intensität I entspricht, und in welchem ein exemplarischer spektraler Intensitätsverlauf angenommen ist. Nach der ersten Aufnahme bewegt die Ansteuerung 20 das bewegliche Gitter 10 in eine andere Stellung. Die Detektorzeile 16 nimmt eine zweite Aufnahme vor, wobei jedes Detektorelement 16a und 16b ein zu dem Fall der ersten Aufnahme unterschiedlichen spektralen Bestandteil des Lichtes 18 erfaßt. Das Ergebnis der zweiten Aufnahme bzw. Belichtung ist in einem Graphen 24 schematisch gezeigt, wobei wiederum die x-Achse der Wellenlänge λ und die y-Achse der Intensität I entspricht. Wie zu sehen ist, ist im Beispiel von Fig. 5 angenommen worden, daß das bewegliche Gitter 109 zwischen der ersten und der zweiten Aufnahme soweit bewegt worden ist, daß sich der Wellenlängenbereich der zweiten Aufnahme an denjenigen der ersten Aufnahme anschließt. Hierdurch wird die Länge der Detektorzeile 16 virtuell verlängert.

Die beiden Aufnahmen 22 und 24 werden an eine Kombinationseinrichtung 26 weitergeleitet, die sowohl mit der Detektorzeile 16, um von derselben die Intensitätswerte jedes Detektorelements zu jeder Belichtung zu erhalten, als auch über die Steuereinheit 21 mit der Ansteuerung 20, um von einem der beiden Informationen hinsichtlich der Stellung des Gitters 10 zu den Belichtungszeitpunkten oder eine den Intensitätswerten zugehörige Wellenlängenskala zu erhalten, verbunden ist, und die basierend auf den Aufnahmen 22 und 24 ein Ergebnis 28 liefert, das der Bestimmung der spektralen Verteilung des Lichtstrahls 12 entspricht und in Fig. 2 schematisch als Graph dargestellt ist, bei dem wiederum die x-Achse der Wellenlänge und die y-Achse der Intensität I entspricht. Wie es zu erkennen ist, ist der Detektionsbereich des Ergebnisses 28 in etwa doppelt so groß wie diejenigen der einzelnen Aufnahmen 22 und 24. Die Kombinationseinrichtung 26 erzeugt das Ergebnis 28 im einfachsten Fall lediglich durch Aneinanderfügen der Daten der ersten Aufnahme 22 und der Daten der zweiten Aufnahme 24. Das Datenformat besteht beispielsweise aus einer Aneinanderreichung von Paaren aus jeweils einem Intensitätswert und dem dazugehörigen Wellenlängenwert. Die Wellenlängenwerte zu jedem Intensitätswert bzw. die Wellenlängenskala werden aus Informationen über die Stellungen des Gitters 10 zu den Zeitpunkten der Aufnahmen hergeleitet, wobei die Herleitung entweder in der Steuereinheit 21 oder der Kombinationseinrichtung 26 selbst durchgeführt wird.

Für viele Anwendungsbereiche ist es jedoch erforderlich, daß das Ergebnis 28 in einer Form vorliegt, bei denen die spektralen Intensitätswerte an äquidistanten Abtastwellenlängen vorliegen. Für diesen Fall kann es vorteilhaft sein, wenn die Kombinationseinrichtung 26 die durch einfaches Aneinanderfügen der ersten und zweiten Aufnahme 22 und 24 erhaltenen Daten zunächst interpoliert und erneut abtastet, um die Spektrumsbestimmung zu erhalten.

Obwohl in Fig. 2 ein Ausführungsbeispiel beschrieben worden ist, bei dem zwei Aufnahmen dazu verwendet worden sind, den Detektionsbereich zu vergrößern, können ferner zwei Aufnahmen kombiniert werden, um die Auflösung zu erhöhen. In diesem Fall steuert die Steuereinheit die Belichtungszeitpunkte, zu denen die Detektorzeile 16 Aufnahmen durchführen soll, derart, daß der Unterschied zwischen den Stellungen nur gering ist, so daß die Wellenlängenbereiche, die von den beiden Aufnahmen umfaßt werden, im wesentlichen gleich sind, daß sich aber die Wellenlänge die von einem speziellen Detektorelement 16a bzw. 16b bei der zweiten Aufnahme erfaßt wird, von derjenigen, die dasselbe Element während der ersten Aufnahme erfaßt hat, um beispielsweise die Hälfte des Wellenlängenabstands zweier benachbarter Detektorelemente unterscheidet. Das kombinierte Ergebnis 28 besäße in diesem Fall zwar lediglich einen Detektionsbereich einer einzigen Aufnahme, jedoch eine in etwa doppelt so hohe Auflösung.

Bezüglich des beweglichen Gitters wird darauf hingewiesen, daß derselbe, wie bezugnehmend auf Fig. 1 beschrieben, beispielsweise eine mikromechanisch hergestellter Spiegel mit einer Mirkostruktur als Gitter sein kann, der an zwei gegenüberliegenden Seitenmitten entlang der Achse 14 getragen wird. In einer einfachen Ausführung könnten Anschläge für das bewegliche Gitter 10 vorgesehen sein, die zwei Endstellungen für das Gitter 10 definieren, an denen die Aufnahmen für eine Spektrumbestimmung durchgeführt werden. Die Endstellungen bzw. Anschläge könnten derart entworfen werden, daß eine Auflösungsverdoppelung oder eine vergrößerter Aufnahmebereich erzielt wird.

Es wird darauf hingewiesen, daß, obwohl in Fig. 2 als dispersives Element ein Gitter 10 in Transmission verwendet worden ist, das dispersive Element ferner ein Spiegel mit einer Gitterstruktur, d.h. ein in Reflexion verwendetes Gitter, oder aber ein prismenförmiger Gegenstand sein könnte. Ferner wird darauf hingewiesen, daß anstelle der quasistatischen Bewegung, wie sie bezugnehmend auf Fig. 1 beschrieben worden ist, das dispersive Element ferner in eine Schwingung und insbesondere in eine resonante Schwingung versetzt werden könnte, indem die Variation der ausgelenkten Stellung durch die Steuereinheit entsprechend schnell mit einer Schwingungsfrequenz durchgeführt wird. Eine Schwingungsfrequenz in der Nähe der Resonanzfrequenz ermöglicht in dem Fall einer Miniaturisierung aufgrund der Resonanzüberhöhung bei vertretbarem Energieaufwand hohe Auslenkungen und gewährleistet zudem, daß das Spektrometer unempfindlich gegen Stöße und Erschütterungen ist und nur eine minimale oder keinen Kalibrieraufwand benötigt.

Bezugnehmend auf Fig. 3 wird im folgenden eine spezielle Realisierung eines Spektrometers gemäß einem Ausführungsbeispiel der vorliegenden Erfindung beschrieben, welches ein quasistatisch betriebenes Gitter sowie eine Photodiodenzeile aufweist, und somit die Vorteile eines beweglichen dispersiven Elements mit denjenigen einer Detektorzeile kombiniert. Insbesondere ist das Spektrometer von Fig. 3 als Prozeßspektrometer geeignet.

Das Spektrometer von Fig. 3 besteht aus einem Lichtwellenleiter 100, einem beweglichen bzw. schwingfähig aufgehängten Gitter 102, einer Detektorzeile 104, wie z.B. einer Photodioden- oder CCD-Zeile, die aus einer Mehrzahl von Detektorelementen besteht, die durchnummeriert sind, einem Auswerteschaltkreis 106, einer Gitteransteuerung 108, einer Steuereinheit 110 und einer Rechnereinheit 112. Die Steuereinheit 110 ist über den Auswerteschaltkreis 106 mit der Detektorzeile 104, um derselben ein Signal zum Auslösen der Belichtung bzw. Verschlußsignale zuzuführen, mit der Gitteransteuerung 108, um von derselben Informationen über die augenblickliche Stellung des Gitters 102 zu erhalten, und mit der Rechnereinheit 112 verbunden, um derselben Informationen zuzuführen, die zur Herleitung einer Wellenlängenskala für die von der Detektorzeile 104 erfaßten Intensitätswerte notwendig sind oder diese Wellenlängenskala selbst anzeigen. Die Rechnereinheit 112 ist über den Auswerteschaltkreis 106 ebenfalls mit der Detektorzeile 104 verbunden, um von derselben die erfaßten wellenlängenabhängigen Intensitätswerte zu erhalten.

Der Lichtwellenleiter 100 dient gleichzeitig als Eintrittsspalt und ist geeignet angeordnet, um das Licht, dessen spektrale Verteilung bestimmt werden soll, derart in das Spektrometer einzukoppeln, daß es auf das schwingende Gitter 102 auftrifft, wie es durch gepunktete Linien 114 angedeutet ist. Der Lichtwellenleiter 100 weist beispielsweise einen Durchmesser von 50 bis 200 µm auf. Das auf das Gitter 102 auffallende Licht 114 wird durch das Gitter 102 in seine spektralen Bestandteile zerlegt und trifft, wie es durch gestrichelte Linien 116 dargestellt ist, auf der Detektorzeile 104 auf. Jedes Detektorelement der Detektorzeile 104 gibt die erfaßte Intensität an den Auswerteschaltkreis 106 aus, der diese Intensitäten unter Angabe der entsprechenden Detektorelementnummer des jeweiligen Detektorelements an die Rechnereinheit 112 weiterleitet.

Die Gitteransteuerschaltung 108 bewirkt eine Variation der Stellung des Gitters 102 um eine Achse 120. Der Antrieb durch die Ansteuerschaltung 108 erfolgt über eine mechanische, induktive oder kapazitive oder eine andere geeignete Kopplung 122, wie bezüglich Fig. 1 beschrieben. Die Ansteuerschaltung 108, die die Stellungen des Gitters 102 variiert, bestimmt zudem die momentane Stellung des Gitters 102 (entweder durch Erfassung oder unter Ausnutzung eines bekannten Zusammenhangs zwischen Auslenkung des Spiegels 102 und der Höhe der Ansteuerung) und gibt diese Informationen an die Steuereinheit 110 aus.

Wie es bezugnehmend auf Fig. 2 bereits beschrieben worden ist, definiert die augenblickliche Stellung des Gitters 102 für jedes Detektorelement eine Wellenlänge, die für dieses Detektorelement erfaßbar ist. Jeder Stellung ist folglich ein Wellenlängenbereich, innerhalb dessen das spektral zerlegte Licht 116 durch die Detektorzeile abgetastet wird, oder eine Lage einer Zentralwellenlänge entlang einer Ausdehnungsrichtung der Detektorzeile 104 zugeordnet. Die Detektorzeile ist schräg und vorzugsweise senkrecht zu einer Ebene angeordnet, die parallel zur Achse 120 verläuft und mit der Spiegeloberfläche des Gittes 102 in der Ruhelage desselben einen Winkel einschließt, der gleich dem Einfallswinkel des Lichtstrahls 114 ist.

Die Steuereinheit 110 überwacht die Informationen über die augenblickliche Stellung des Gitters 102 und gibt an den Auswerteschaltkreis 106 zu den Zeitpunkten, zu denen eine Belichtung bzw. Aufnahme durch die Photodiodenzeile 104 vorgenommen werden soll, Auslöseimpulse aus, der dieselben wiederum an die Photodiodenzeile 104 weiterleitet, um die Detektorelemente zu veranlassen, die Abtastung des wellenlängenabhängig aufgespaltenen Lichtes 116 vorzunehmen.

Die Steuereinheit 110 berechnet außerdem zu jedem Auslöseimpuls oder jeder Stellung des Gitters 102 zum Zeitpunkt des Auslösimpulses den Wellenlängenbereich, der der Stellung des Gitters 102 zu diesem Belichtungszeitpunkt zugeordnet ist und angibt, welcher Wellenlängenbereich durch die Detektorelemente der Detektorzeile 104 zum Belichtungszeitpunkt abgetastet wird, oder eine andere gleichwertige Angabe, wie z.B. die Lage der Zentralwellenlänge zum Zeitpunkt der Belichtung in Einheiten der Detektorelementnummer, und leitet diese Informationen an die Rechner 112 weiter, die aus diesen Informationen jeder Intensität bzw. jeder zugeordneter Photodiodennummer eine Wellenlänge zuordnet und hierdurch die Wellenlängenskala kalibriert. Die Rechnereinheit 112 gibt als Ausgangssignal die spektrale Verteilung des Lichtes 114 aus, wie es schematisch durch einen Graphen 124 dargestellt ist, bei dem die x-Achse der Wellenlänge λ und die y-Achse der Intensität I entspricht, und in welchem schematisch eine exemplarische spektrale Intensitätsverteilung dargestellt ist. Das Ausgangssignal der Rechnereinheit 112 entspricht somit einer Darstellung der gemessenen Intensitätssignale gegen die errechneten Wellenlängenskala, die wiederum dem gemessenen optischen Spektrum des einfallenden Lichts 114 entspricht.

Das Spektrometer von Fig. 3 ist in verschiedenen Betriebsmodi betreibbar. In einem ersten Betriebsmodus bestimmt die Steuereinheit 110 die Belichtungs- bzw. Abtastzeitpunkte derart, daß dieselben stets bei einer bestimmten Stellung des Gitters 102 bzw. einer bestimmten Auslenkung desselben erfolgen. Die Steuereinheit steuert folglich die Aufnahme- bzw. Verschlußfunktion der Detektorzeile 104. Jede Abtastung der Detektorzeile 104, die über den Auswerteschaltkreis 106 an die Rechnereinheit 112 ausgegeben wird, entspricht folglich demselben Wellenlängenbereich, der der speziellen Stellung bzw. Auslenkung des Gitters 102 zugeordnet ist. Bei diesem Betriebsmodus entspricht das von der Rechnereinheit 112 ausgegebene Ergebnis einer einzigen Abtastung durch die Detektorzeile 104 und umfaßt genau so viel Abtastwerte, wie Detektorelemente in der Detektorzeile 104 umfaßt sind, und ist durch eine Auflösung und einen Wellenlängenbereich definiert, wie sie durch die Länge der Detektorzeile 104, den Abstand der Detektorelemente der Detektorzeile 104, der Gitterstrichzahlen des Gitters 102 sowie die Lagebeziehung des Gitters 102 zu der Detektorzeile 104 festgelegt sind. Durch Variieren der Auslenkung des Gitters 102 ist die Wellenlängenskala bzw. der Wellenlängenbereich der spektralen Verteilung, die von der Rechnereinheit 112 ausgegeben wird, beispielsweise manuell über einen Drehschalter oder auf programmierte Weise variierbar, ohne daß sich die Auflösung des von der Rechnereinheit 112 ausgegebenen Spektrums ändert.

Bei einem weiteren Betriebsmodus bewirkt die Steuereinheit 110 mehrere Aufnahmen bzw. Belichtungen durch die Detektorzeile 104, die von der Rechnereinheit 112 miteinander kombiniert werden, um die spektrale Verteilung des Lichtes 114 zu bestimmen. Die Steuereinheit 110 gibt die Auslösepulse an den Ansteuerschaltkreis 106 beispielsweise jedesmal aus, wenn das Gitter 102 eine neue Stellung eingenommen hat. Auf diese Weise entstehen mehrere Aufnahmen der spektralen Verteilung des Lichtes 114 zu unterschiedlichen Stellungen des Gitters 102, von den jede Aufnahme aus so vielen Abtastwerten, wie Detektorelemente vorhanden sind, besteht. Die Steuereinheit 110 wählt beispielsweise zwei unterschiedliche Stellungen für eine Aufnahme zur Auflösungsverdopplung oder zur Detektionsbereichserweiterung wie oben beschrieben ein. Es werden folglich zwei Belichtungen bzw. Aufnahmen durch die Photodiodenzeile 104 abgetastet und an die Rechnereinheit 112 weitergeleitet. Beide Aufnahmen entsprechen zwei verschiedenen, und bei geeigneter Auswahl der Stellungen, nicht überschneidenden Wellenlängenbereichen, die sich gegenseitig ergänzen. Die Rechnereinheit 112 empfängt zu jeder Aufnahme den entsprechenden Wellenlängenbereich von der Steuereinheit 110, den dieselbe aus der Stellung zum Belichtungszeitpunkt berechnet. Auf diese Weise kann die Bestimmung der spektralen Verteilung des Lichtes 114 aus mehreren Aufnahmen mit unterschiedlichen und vorzugsweise aneinander anschließenden Wellenlängebereichen zusammengesetzt werden. Es wäre jedoch ebenfalls denkbar, daß die Steuereinheit 110 die Stellungen derart wählt, daß die Wellenlängenbereiche bzw. Wellenlängenskalen dieser Aufnahmen sich im wesentlichen entsprechen, wobei jedoch die Wellenlängen, die den einzelnen Detektorelemente während der unterschiedlichen Aufnahmen entsprechen, ineinander verschachtelt sind, so daß virtuell die Photodiodendichte der Photodiodenzeile 104 erhöht und damit das Spektrum mit einer erhöhten Auflösung erfaßt wird. Es sind auch Kombinationen verschachtelter und nicht verschachtelter Wellenlängenabschnitte der verschiednen, zu kombinierenden Aufnahmen denkbar.

Die Rechnereinheit 112 kann die verschiedenen Aufnahmen nach der Kombination in verschiedenen Formaten ausgeben, wie z.B. paarweise jeden Intensitätswert mit seiner zugeordneten Wellenlänge, und zwar von jeder Belichtung von jedem Detektorelement. Ferner ist es möglich, daß die Rechnereinheit 112 die verschiedenen zusammengesetzten Aufnahmen zusammenfügt und anschließend interpoliert und erneut abtastet, um die spektrale Verteilung in einer Form zu erhalten, bei denen die spektralen Intensitätswerte äquidistant liegen, wie es bei verschiedenen Anwendungen zur weiteren Auswertung des Spektrums notwendig ist.

Das Spektrometer von Fig. 3 beruht somit auf einer Kombination des in der Beschreibungseinleitung beschriebenen Miniaturspektrometertyps mit fest eingebautem Gitter mit den Möglichkeiten des Schwinggitters bzw. Schwingspiegels, der hier anstatt einer einfachen Spiegeloberfläche eine in beispielsweise CMOS-kompatibler Mikrotechnik hergestellte Gitterstruktur aufweist. Die Gitterstrukturen weisen beispielsweise 500 oder mehr Striche pro Millimeter auf. Der Antrieb erfolgt beispielsweise kapazitiv über Interdigitalelektroden. Ein Vorteil des schwingfähig aufgehängten Spiegels des Spektrometers von Fig. 2 besteht darin, daß das mikromechanische Gitter und gegebenenfalls zusätzlich ein dazugehöriger Ansteuerschaltkreis kostengünstig im Scheibenverbund mit CMOS-kompatibler Technologie realisiert werden können. Auf diese Weise können große Stückzahlen von Gittern mit Halterung bzw. Aufhängung auf effiziente Weise hergestellt werden.

Bezugnehmend auf Fig. 3 wird noch darauf hingewiesen, daß die Auslenkung anstatt quasistatisch auch mit einer Schwingung, wie z.B. resonant, erfolgen könnte. Die Gitteransteuerschaltung 108 würde in diesem Fall eine Schwingung 118 des Gitters 102 um die Achse 120 mit z.B. im wesentlichen der Resonanzfrequenz des Gitters 102 bewirken. Der Antrieb durch die Ansteuerschaltung 108 würde über eine ähnliche mechanische, induktive oder kapazitive oder eine andere geeignete Kopplung 122 erfolgen. Die Ansteuerschaltung 108, die die Schwingungsfrequenz des Gitters 102 regelt, würde die momentane Stellung des Gitters 102 erfassen und diese Informationen an die Steuereinheit 110 ausgeben. Dem beweglichen Gitter 102 ist eine Resonanz- bzw. Eigenfrequenz ω₀ für Schwingungen um die Ruhelage um die Achse 120 zugeordnet, die von der Federkonstante der Aufhängung bzw. Halterung sowie den Abmessungen des Gitters 102 abhängt, und in deren Nähe Resonanzüberhöhung auftritt. Der Grad an Resonanzüberhöhung hängt von der Güte des Schwingungssystems aus Halterung und aufgehängtem Gitter ab. Die schwingungsmäßige Ansteuerung des Gitters 110 hätte auch bezüglich des Kombinationsmodus Vorteile zu bieten, da er eine einfache Art und Weise zur wiederholten Messung kombinierter Messungen basierend auf lediglich einer geeigneten Steuerung der Synchronisation zwischen Schwingungsfrequenz des Gitters 102 und einer Aufnahmefrequenz der Detektorzeile 104 darstellen würde. Im Fall des schwingenden Gitters gibt die Steuereinheit 110 die Auslösepulse beispielsweise an den Ansteuerschaltkreis 106 mit einer Frequenz aus, die einem ganzzahligen Vielfachen n oder einem ganz rationalen Vielfachen n/m der Gitterfrequenz entspricht. Auf diese Weise entstehen pro Schwingung bzw. nach jeder (n*m)-ten Schwingung (n, m teilerfremd) jeweils n bzw. n x m Aufnahmen der spektralen Verteilung des Lichtes 114 zu unterschiedlichen Stellungen des Gitters 102, von den jede Aufnahme aus so vielen Abtastwerten, wie Detektorelemente vorhanden sind, besteht. Die Steuereinheit definiert die Belichtungszeitpunkte beispielsweise mit einer Frequenz, die dem Doppelten der Schwingungsfrequenz des Gitters 102 entspricht. Pro Schwingung werden folglich zwei Belichtungen bzw. Aufnahmen durch die Photodiodenzeile 104 abgetastet und an die Rechnereinheit 112 weitergeleitet. Beide Aufnahmen entsprechen zwei verschiedenen, und bei geeigneter Phasenlage und Auslenkung, zwei sich nicht überschneidenden Wellenlängenbereichen, die sich gegenseitig ergänzen. Die Rechnereinheit 112 empfängt zu jeder Aufnahme den entsprechenden Wellenlängenbereich, den die Steuereinheit 110 aus der von der Ansteuereinheit 108 empfangenen Stellung zum Belichtungszeitpunkt berechnet. Auf diese Weise kann die Bestimmung der spektralen Verteilung des Lichtes 114 aus mehreren Aufnahmen mit unterschiedlichen und vorzugsweise aneinander anschließenden Wellenlängebereichen zusammengesetzt werden. Es wäre jedoch ebenfalls denkbar, daß die Steuereinheit 110 die Phasenverschiebung zwischen der Belichtung und der Schwingung derart wählt, daß die Wellenlängenbereiche bzw. Wellenlängenskalen dieser Aufnahmen sich im wesentlichen entsprechen, wobei jedoch die Wellenlängen, die den einzelnen Detektorelemente während der unterschiedlichen Aufnahmen entsprechen, ineinander verschachtelt sind, so daß virtuell die Photodiodendichte der Photodiodenzeile 104 erhöht und damit das Spektrum mit einer erhöhten Auflösung erfaßt wird. Es sind auch Kombinationen verschachtelter und nicht verschachtelter Wellenlängenabschnitte der verschiednen, zu kombinierenden Aufnahmen denkbar. Eine resonante Schwingungsfrequenz würde eine Unempfindlichkeit gegen Stöße und Erschütterungen, eine Reduzierung des Kalibrieraufwands und aufgrund der Resonanzerhöhung trotz Steifheit des Halbleitermaterials bei Realisierungen in einem Halbleiter-Chip eine ausreichende Auslenkung gewährleisten.

## Patentansprüche

1. Spektrometer mit
einem dispersiven Element (10; 102) zum spektralen Zerlegen eines Lichtstrahls (12; 114), dessen spektrale Verteilung bestimmt werden soll, in spektrale Bestandteile;
einer Aufhängung zum Tragen des dispersiven Elements (1,2; 10; 102) und zum Vorspannen desselben in eine Ruhestellung mit einer Vorspannkraft, wenn sich das dispersive Element (1,2; 10; 102) in einer ausgelenkten Stellung befindet;
einer Einrichtung (6a, 6b) zum Halten des dispersiven Elements an der ausgelenkten Stellung, wobei die Einrichtung zum Halten ausgebildet ist, um eine Haltekraft an das dispersive Element anzulegen, so daß die ausgelenkte Stellung des dispersiven Elements eine Stellung ist, an der sich ein Kräftegleichgewicht zwischen der Haltekraft und der Vorspannkraft einstellt; und
einem Detektor, wobei der Detektor ein erstes Detektorelement (16a) und ein zweites Detektorelement (16b) aufweist,
wobei das Spektrometer ferner folgende Merkmale aufweist:
eine Steuereinheit (21; 110), die mit der Einrichtung (20; 108) zum Bewegen des dispersiven Elements (10; 102) gekoppelt ist, zum Steuern des Detektors (16) derart, daß das erste Detektorelement (16a) einen ersten spektralen Bestandteil, wenn sich das dispersive Element (10; 102) in einer ersten Stellung befindet und einen zweiten spektralen Bestandteil, wenn sich das dispersive Element (10; 102) in einer zweiten Stellung befindet, erfaßt, und daß das zweite Detektorelement (16b) einen dritten spektralen Bestandteil, wenn sich das dispersive Element (10; 102) in der ersten Stellung befindet, und einen vierten spektralen Bestandteil, wenn sich das dispersive Element (10; 102) in der zweiten Stellung befindet, erfaßt, wobei der erste und der dritte erfaßte spektrale Bestandteil eine erste Aufnahme (22) und der zweite und vierte erfaßte spektrale Bestandteil eine zweite Aufnahme (24) bilden; und
eine Einrichtung (26; 112) zum Kombinieren der ersten und zweiten Aufnahme (22, 24), um die spektrale Verteilung (28) des Lichtstrahls (12; 114) zu bestimmen.

2. Spektrometer gemäß Anspruch 1, das ferner folgendes Merkmal aufweist:
eine Steuereinrichtung (7) zum Steuern der Einrichtung (6a, 6b) zum Halten, um die ausgelenkte Stellung zu variieren, so daß für den Detektor (9) verschiedene spektrale Bestandteile erfaßbar sind.

3. Spektrometer gemäß Anspruch 1 oder 2, das ferner folgendes Merkmal aufweist:
eine Einrichtung zum Erfassen der Auslenkung des dispersiven Elements.

4. Spektrometer gemäß Anspruch 1 oder 2, bei dem die Einrichtung zum Halten des dispersiven Elements an der ausgelenkten Stellung angepaßt ist, um die Haltekraft abhängig von einem vorbestimmten Zusammenhang zwischen einer angelegten Haltekraft und einer Auslenkung des dispersiven Elements zu bestimmen.

5. Spektrometer gemäß einem der Ansprüche 1 bis 4, bei dem die Steuereinheit (21; 110) angepaßt ist, um den Detektor (16) derart zu steuern, daß die spektralen Bestandteile der ersten Aufnahme (22) außerhalb des zwischen den spektralen Bestandteilen der zweiten Aufnahme (24) liegenden Bereiches liegen.

6. Spektrometer gemäß Anspruch 5, bei dem die Steuereinheit (21; 110) angepaßt ist, um den Detektor (16) derart zu steuern, daß sich die spektralen Bestandteile der ersten Aufnahme (22) an die spektralen Bestandteile der zweiten Aufnahme (24) anschließen, so daß die erste und zweite Aufnahme (22, 24) einen geschlossenen spektralen Bereich bilden.

7. Spektrometer gemäß einem der Ansprüche 1 bis 4, bei dem die Steuereinheit (21; 110) angepaßt ist, um den Detektor (16) derart zu steuern, daß die spektralen Bestandteile der ersten Aufnahme mit denjenigen der zweiten Aufnahme verschachtelt sind, so daß sich die erste und die zweite Aufnahme über im wesentlichen denselben spektralen Bereich erstrecken.

8. Spektrometer gemäß einem der vorhergehenden Ansprüche, bei dem jeder möglichen Stellung des dispersiven Elements (10; 102) ein Wellenlängenbereich zugeordnet ist, und das ferner folgendes Merkmal aufweist:
eine Einrichtung (26; 110) zum Zuordnen einer ersten Wellenlänge zu dem ersten erfaßten Bestandteil und einer dritten Wellenlänge zu dem dritten erfaßten Bestandteil abhängig von dem der ersten Stellung des dispersiven Elements (10; 102) zugeordneten Wellenlängenbereich, und zum Zuordnen einer zweiten Wellenlänge zu dem zweiten erfaßten spektralen Bestandteil und einer vierten Wellenlänge zu dem vierten erfaßten spektralen Bestandteil abhängig von dem der zweiten Stellung des dispersiven Elements (10; 102) zugeordneten Wellenlängenbereich.

9. Spektrometer gemäß einem der vorhergehenden Ansprüche, bei dem das dispersive Element (102) ein Spiegel mit Gitterstruktur ist.

10. Spektrometer gemäß einem der vorhergehenden Ansprüche, bei dem das dispersive Element zwischen der ersten und der zweiten Stellung beweglich ist, und die erste und die zweite Stellung jeweils eine Endstellung definieren.

11. Spektrometer gemäß einem der vorhergehenden Ansprüche, bei denen der Detektor (104) eine Photodiodenzeile oder eine CCD-Zeile ist.

12. Spektrometer gemäß einem der Ansprüche 2 bis 11, bei dem die Steuereinheit (110) angepaßt ist, um die ausgelenkte Stellung derart zu variieren, daß das dispersive Element (102) in eine Schwingung mit einer Schwingungsfrequenz versetzt wird.

13. Spektrometer gemäß Anspruch 12, bei dem die Steuereinheit (110) folgendes Merkmal aufweist:
eine Einrichtung (110) zum Synchronisieren der Bewegungseinrichtung und des Detektors (104).

14. Spektrometer gemäß Anspruch 12 oder 13, bei dem die Steuereinheit (110) angepaßt ist, um den Detektor (104) derart zu steuern, daß derselbe während einer Schwingung die Erfassung zu Zeitpunkten vornimmt, an denen sich das dispersive Element (102) in einer ersten und einer zweiten Stellung befindet.

15. Spektrometer gemäß einem der Ansprüche 12 und 13, bei dem die Steuereinheit (110) folgendes Merkmal aufweist:
eine Einrichtung (21; 110) zum Ansteuern des Detektors (104) mit einem Erfassungssignal, das angibt, wann der Detektor (104) eine Erfassung vornehmen soll, mit einer Frequenz, die gleich einem ganzzahligen oder ganzrationalen Vielfachen der Schwingungsfrequenz ist.

16. Verfahren zur Bestimmung der spektralen Verteilung eines Lichtstrahls:
spektrales Zerlegen des Lichtstrahls in spektrale Bestandteile durch ein dispersives Element;
Tragen des dispersiven Elements (1,2; 10; 102) und Vorspannen desselben in eine Ruhestellung mit einer Vorspannkraft durch eine Aufhängung, wenn sich das dispersive Element (1,2; 10; 102) in einer ausgelenkten Stellung befindet;
Halten des dispersiven Elements an der ausgelenkten Stellung durch Anlegen einer Haltekraft an das dispersive Element, so daß die ausgelenkte Stellung des dispersiven Elements eine Stellung ist, an der sich ein Kräftegleichgewicht zwischen der Haltekraft und der Vorspannkraft einstellt;
Detektieren des spektral zerlegten Lichtstrahls mittels eines Detektors, wobei der Detektor ein erstes Detektorelement (16a) und ein zweites Detektorelement (16b) aufweist, wobei das Detektieren derart stattfindet, daß das erste Detektorelement (16a) einen ersten spektralen Bestandteil, wenn sich das dispersive Element (10; 102) in einer ersten Stellung befindet und einen zweiten spektralen Bestandteil, wenn sich das dispersive Element (10; 102) in einer zweiten Stellung befindet, erfaßt, und daß das zweite Detektorelement (16b) einen dritten spektralen Bestandteil, wenn sich das dispersive Element (10; 102) in der ersten Stellung befindet, und einen vierten spektralen Bestandteil, wenn sich das dispersive Element (10; 102) in der zweiten Stellung befindet, erfaßt, wobei der erste und der dritte erfaßte spektrale Bestandteil eine erste Aufnahme (22) und der zweite und vierte erfaßte spektrale Bestandteil eine zweite Aufnahme (24) bilden; und
Kombinieren der ersten und zweiten Aufnahme (22, 24), um die spektrale Verteilung (28) des Lichtstrahls (12; 114) zu bestimmen.

## Claims

1. A spectrometer, comprising
a dispersive element (10; 102) for spectrally decomposing a light beam (12; 114), whose spectral distribution is to be determined, into spectral components;
a suspension for supporting the dispersive element (1,2; 10; 102) and for biasing the same into a resting position with a biasing force, when the dispersive element (1,2; 10; 102) is in a deflected position;
a means (6a, 6b) for holding the dispersive element at the deflectable position, wherein the means for holding is formed to apply a holding force to the dispersive element, so that the deflected position of the dispersive element is a position where an equilibrium of powers between the holding force and the biasing force is established; and
a detector, wherein the detector has a first detector element (16a) and a second detector element (16b),
the spectrometer further comprising:
a control unit (21; 110), which is coupled to the means (20; 108) for moving the dispersive element (10; 102), for controlling the detector (16) such that the first detector element (16a) detects a first spectral component when the dispersive element (10; 102) is in a first position, and a second spectral component when the dispersive element (10; 102) is in a second position, and that the second detector element (16b) detects a third spectral component when the dispersive element (10; 102) is in the first position, and a fourth spectral component when the dispersive element (10; 102) is in the second position, wherein the first and third detected spectral components form a first shot (22) and the second and fourth detected spectral components a second shot (24); and
a means (26; 112) for combining the first and second shots (22, 24) to determine the spectral distribution (28) of the light beam (12; 114).

2. The spectrometer according to claim 1, further comprising:
a control means (7) for controlling the means (6a, 6b) for holding to vary the deflected position so that different spectral components are detectable for the detector (9).

3. The spectrometer according to claim 1 or 2, further comprising:
a means for detecting the deflection of the dispersive element.

4. The spectrometer according to claim 1 or 2, wherein the means for holding the dispersive element is adapted at the deflected position to determine the holding force depending on a predetermined connection between an applied holding force and a deflection of the dispersive element.

5. The spectrometer according to one of claims 1 to 4, wherein the control unit (21; 110) is adapted to control the detector (16) such that the spectral components of the first shot (22) are outside the region lying between the spectral components of the second shot (24).

6. The spectrometer according to claim 5, wherein the control unit (21; 110) is adapted to control the detector (16) such that spectral components of the first shot (22) are adjacent to the spectral components of the second shot (24), so that the first and second shots (22, 24) form a closed spectral range.

7. The spectrometer according to one of claims 1 to 4, wherein the control unit (21; 110) is adapted to control the detector (16) such that the spectral components of the first shot are interleaved with those of the second shot, so that the first and second shots extend essentially across the same spectral range.

8. The spectrometer according to one of the preceding claims, wherein a wavelength range is associated with every possible position of the dispersive element (10; 102), and further comprising
a means (26; 110) for associating a first wavelength to the first detected component and a third wavelength to the third detected component depending on the wavelength range associated with the first position of the dispersive element (10; 102), and for associating a second wavelength to a second detected spectral component and a fourth wavelength to the fourth detected spectral component depending on the wavelength range associated with the second position of the dispersive element (10; 102).

9. The spectrometer according to one of the preceding claims, wherein the dispersive element (102) is a mirror with grating structure.

10. The spectrometer according to one of the preceding claims, wherein the dispersive element is moveable between the first and second positions, and the first and second positions each define one end position.

11. The spectrometer according to one of the preceding claims, wherein the detector (104) is a photodiode line or a CCD line.

12. The spectrometer according to one of claims 2 to 11, wherein the control unit (110) is adapted to vary the deflected position such that the dispersive element (102) is vibrated with a vibration frequency.

13. The spectrometer according to claim 12, wherein the control unit (110) comprises:
a means (110) for synchronizing the moving means and the detector (104).

14. The spectrometer according to claim 12 or 13, wherein the control unit (110) is adapted to control the detector (104) such that the same makes the detection during a vibration at the times when the dispersive element (102) is in a first and a second position.

15. The spectrometer according to one of claims 12 and 13, wherein the control unit (110) comprises:
a means (21; 110) for driving the detector (104) with a detection signal, which indicates when the detector (104) is to perform a detection, with a frequency, which is equal to an integer or fully rational multiple of the vibration frequency.

16. A method for determining the spectral distribution of a light beam, comprising
spectrally decomposing the light beam in spectral components by a dispersive element;
supporting the dispersive element (1,2; 10; 102) and biasing the same into a resting position with a biasing force by a suspension, when the dispersive element (1,2; 10; 102) is in a deflected position;
holding the dispersive element at the deflected position by applying a holding force to the dispersive element, so that the deflected position of the dispersive element is a position where an equilibrium of powers is established between the holding power and the biasing power;
detecting the spectrally decomposed light beam via a detector, wherein the detector has a first detector element (16a) and a second detector element (16b), wherein the detecting takes place such that the first detector element (16a) detects a first spectral component when the dispersive element (10; 102) is in a first position, and a second spectral component when the dispersive element (10; 102) is in a second position, and that the second detector element (16b) detects a third spectral component when the dispersive element (10; 102) is in the first position, and a fourth spectral component when the dispersive element (10; 102) is in the second position, wherein the first and third detected spectral components form a first shot (22) and the second and fourth detected spectral components a second shot (24); and
combining the first and second shots (22, 24) to determine the spectral distribution (28) of the light beam (12; 114).

## Revendications

1. Spectromètre, avec
un élément dispersif (10 ; 102) destiné à décomposer spectralement un rayon lumineux (12; 114) dont la répartition spectrale doit être déterminée en composantes spectrales ;
une suspension destinée à porter l'élément dispersif (1, 2 ; 10; 102) et à prétendre ce dernier en une position de repos avec une force de prétension lorsque l'élément dispersif (1, 2 ; 10 ; 102) se trouve dans une position déformée ;
un dispositif (6a, 6b) destiné à maintenir l'élément dispersif dans la position déformée, le dispositif de maintien étant réalisé de manière à appliquer une force de maintien sur l'élément dispersif, de sorte que la position déformée de l'élément dispersif soit une position dans laquelle s'établit un équilibre de force entre la force de maintien et la force de prétension ; et
un détecteur, le détecteur présentant un premier élément détecteur (16a) et un deuxième élément détecteur (16b),
le spectromètre présentant, par ailleurs, les caractéristiques suivantes :
une unité de commande (21 ; 110) couplé au dispositif (20 ; 108) de déplacement de l'élément dispersif (10 ; 102), pour commander le détecteur (16) de sorte que le premier élément détecteur (16a) détecte une première composante spectrale lorsque l'élément dispersif (10 ; 102) se trouve dans une première position et une deuxième composante spectrale lorsque l'élément dispersif (10 ; 102) se trouve dans une deuxième position, et que le deuxième élément détecteur (16b) détecte une troisième composante spectrale lorsque l'élément dispersif (10; 102) se trouve dans la première position, et une quatrième composante spectrale lorsque l'élément dispersif (10 ; 102) se trouve dans la deuxième position, la première et la troisième composante spectrale captée formant une première prise de vue (22) et la deuxième et la quatrième composante spectrale captée formant une deuxième prise de vue (24) ; et
un dispositif (26 ; 112) destiné à combiner la première et la deuxième prise de vue (22, 24), pour déterminer la répartition spectrale (28) du rayon lumineux (12 ; 114).

2. Spectromètre selon la revendication 1, présentant, par ailleurs, la caractéristique suivante:
un dispositif de commande (7) destiné à commander le dispositif de maintien (6a, 6b), pour faire varier la position déformée, de sorte que différentes composantes spectrales puissent être captées par le détecteur (9).

3. Spectromètre selon la revendication 1 ou 2, présentant, par ailleurs, la caractéristique suivante :
un dispositif destiné à capter la déformation de l'élément dispersif.

4. Spectromètre selon la revendication 1 ou 2, dans lequel le dispositif de maintien de l'élément dispersif est adapté à la position déformée, pour déterminer la force de maintien en fonction d'un rapport prédéterminé entre une force de maintien appliquée et une déformation de l'élément dispersif.

5. Spectromètre selon l'une des revendications 1 à 4, dans lequel l'unité de commande (21 ; 110) est adaptée pour commander le détecteur (16) de sorte que les composantes spectrales de la première prise de vue (22) se situent en dehors de la zone située entre les composantes spectrales de la deuxième prise de vue (24).

6. Spectromètre selon la revendication 5, dans lequel l'unité de commande (21 ; 110) est adaptée pour commander le détecteur (16) de sorte que les composantes spectrales de la première prise de vue (22) suivent les composantes spectrales de la deuxième prise de vue (24), de sorte que la première et la deuxième prise de vue (22, 24) forment une zone spectrale fermée.

7. Spectromètre selon l'une des revendications 1 à 4, dans lequel l'unité de commande (21 ; 110) est adaptée pour commander le détecteur (16) de sorte que les composantes spectrales de la première prise de vue soient emboîtées avec celles de la deuxième prise de vue, de sorte que la première et la deuxième prise de vue s'étendent substantiellement sur la même zone spectrale.

8. Spectromètre selon l'une des revendications précédentes, dans lequel est associée à chaque position possible de l'élément dispersif (10 ; 102) une plage de longueurs d'onde, et qui présente, par ailleurs, la caractéristique suivante :
un dispositif (26 ; 110) destiné à associer une première longueur d'onde à la première composante détectée et une troisième longueur d'onde à la troisième composante détectée en fonction de la plage de longueurs d'onde associée à la première position de l'élément dispersif (10 ; 102), et à associer une deuxième longueur d'onde à la deuxième composante spectrale détectée et une quatrième longueur d'onde à la quatrième composante spectrale détectée en fonction de la plage de longueurs d'onde associée à la deuxième position de l'élément dispersif (10 ; 102).

9. Spectromètre selon l'une des revendications précédentes, dans lequel l'élément dispersif (102) est un miroir à structure en grille.

10. Spectromètre selon l'une des revendications précédentes, dans lequel l'élément dispersif peut se déplacer entre la première et la deuxième position, et la première et la deuxième position définissent, chacune, une position de fin de course.

11. Spectromètre selon l'une des revendications précédentes, dans lequel le détecteur (104) est une ligne de photodiodes ou une ligne de CCD.

12. Spectromètre selon l'une des revendications 2 à 11, dans lequel l'unité de commande (110) est adaptée pour faire varier la position déformée de sorte que l'élément dispersif (102) soit amené à osciller avec une fréquence d'oscillation.

13. Spectromètre selon la revendication 12, dans lequel l'unité de commande (110) présente la caractéristique suivante :
un dispositif (110) destiné à synchroniser le dispositif de déplacement et le détecteur (104).

14. Spectromètre selon la revendication 12 ou 13, dans lequel l'unité de commande (110) est adaptée pour commander le détecteur (104) de sorte que ce dernier procède, pendant une oscillation, à la détection à des moments où l'élément dispersif (102) se trouve dans une première et une deuxième position.

15. Spectromètre selon l'une des revendications 12 et 13, dans lequel l'unité de commande (110) présente la caractéristique suivante :
un dispositif (21 ; 110) destiné à activer le détecteur (104) par un signal de détection qui indique quand le détecteur (104) doit procéder à une détection, avec une fréquence qui est égale à un multiple de nombre entier ou rationnel entier de la fréquence d'oscillation.

16. Procédé pour déterminer la répartition spectrale d'un rayon lumineux :
décomposer spectralement le rayon lumineux en composantes spectrales par un élément dispersif ;
porter l'élément dispersif (1, 2 ; 10 ; 102) et prétendre ce dernier en une position de repos avec une force de prétension par une suspension lorsque l'élément dispersif (1, 2 ; 10 ; 102) se trouve dans une position déformée ;
maintenir l'élément dispersif dans la position déformée par application d'une force de maintien sur l'élément dispersif, de sorte que la position déformée de l'élément dispersif soit une position dans laquelle s'établit un équilibre de force entre la force de maintien et la force de prétensioon ;
détecter le rayon lumineux décomposé spectralement au moyen d'un détecteur, le détecteur présentant un premier élément détecteur (16a) et un deuxième élément détecteur (16b), la détection ayant lieu de sorte que le premier élément détecteur (16a) détecte une première composante spectrale lorsque l'élément dispersif (10 ; 102) se trouve dans une première position et une deuxième composante spectrale lorsque l'élément dispersif (10; 102) se trouve dans une deuxième position, et que le deuxième élément détecteur (16b) détecte une troisième composante spectrale lorsque l'élément dispersif (10 ; 102) se trouve dans la première position, et une quatrième composante spectrale lorsque l'élément dispersif (10 ; 102) se trouve dans la deuxième position, la première et la troisième composante spectrale captée formant une première prise de vue (22) et la deuxième et la quatrième composante spectrale captée formant une deuxième prise de vue (24) ; et
combiner la première et la deuxième prise de vue (22, 24), pour déterminer la répartition spectrale (28) du rayon lumineux (12 ; 114).
